(19) Europäisches Patentamt
European Patent Office
Office européen des brevets

(11) Publication number: 0 349 136
A1

(12) # EUROPEAN PATENT APPLICATION

(21) Application number: 89305791.9

(51) Int. Cl.[4]: H01G 4/22 , H01B 3/22

(22) Date of filing: 08.06.89

(30) Priority: 29.06.88 US 213237
04.05.89 US 347061

(43) Date of publication of application:
03.01.90 Bulletin 90/01

(84) Designated Contracting States:
CH DE FR GB IT LI SE

(71) Applicant: SYBRON CHEMICALS INC
Birmingham Road Box 66
Birmingham New Jersey 08011(US)

(72) Inventor: Greco, William James, Jr.
1815 Binnacle Road
Forked River New Jersey 08731(US)

(74) Representative: Oliver, Roy Edward
POLLAK MERCER & TENCH High Holborn
House 52-54 High Holborn
London WC1V 6RY(GB)

(54) **Electrically insulating fluids.**

(57) An electrical capacitor contains, as a dielectric fluid, ditolylmethane or a mixture of ditolylmethane and another dielectric fluid.

EP 0 349 136 A1

The present invention relates to electrical capacitors and is concerned in particular with electrical insulating fluids and, more specifically, with insulating fluids having good low-temperature properties, which thus make such fluids especially suitable for use in capacitors.

Many dielectric insulator fluids exhibiting desirable electrical properties for use in capacitors have the disadvantage of being essentially non-biodegradable, so that such fluids and capacitors containing them are the potential cause of pollution of the environment. Other fluids, which perform satisfactorily from an electrical standpoint,are undesirable because of other properties, such as relatively high pour points or relatively low flash or fire points.

There is therefore a continuing need for electrical insulating fluids which exhibit a combination of electrical, physical and biodegradable properties which make them optimum candidates for use as electrical insulating fluids in devices such as capacitors.

It has been discovered that ditolylmethane (DTM), which has the following structural formula, is highly suitable for use as an electrical insulating fluid, either alone or in combination with other fluids in any suitable ratio. Mixtures of DTM with one or more of such other fluid in a ratio of 50-50 or, broadly from 20-80 to 80-20, by volume are suitable.

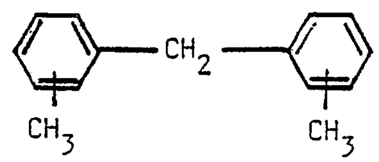

It is known that DTM is suitable in other uses than as electrical dielectric fluids. For instance, DTM has been used in the manufacture of carbonless copy paper solvents, as described in US-A-3,836,383. Prior disclosures of this type do not indicate the advantages and desirability of such materials for use as dielectric fluids in devices such as capacitors. In fact, it is surprising that DTM performs so well in capacitors, because the prior art actually points away from its use. US-A-4,642,730 describes the group of fluid diarylalkanes, of which DTM is a member, as not always being satisfactory as regards their electrical characteristics and discloses that conventional diarylalkane fluids are mixtures of by-product oils from other industrial preparations. In addition, US-A-4,054,937 discloses that dimethyl-substituted diphenylmethane (DTM) is not acceptable, due to its high melting point and high vapour pressure.

It has been discovered that ditolylmethane, which can be prepared inexpensively and easily in ultrapure form (99 + wt.%) via the Baeyer condensation reaction described below, is in fact a superior electrical insulating oil. It is therefore surprising, in view of the indications in the prior art, that DTM performs so well in capacitors.

According to an aspect of the present invention, an electrical capacitor comprises alternate layers of an electrically-conductive material and a dielectric material disposed within a sealed casing, with a dielectric fluid impregnated into the dielectric material, characterised in that the dielectric fluid comprises ditolylmethane.

According to a preferred embodiment, the dielectric fluid comprises a mixture of ditolylmethane and at least one other dielectric fluid.

DTM, used in accordance with the present invention as an electrical insulating fluid, can be prepared easily and inexpensively by the well-known Baeyer condensation of toluene with formaldehyde in the present of an acidic catalyst, by the following reaction:

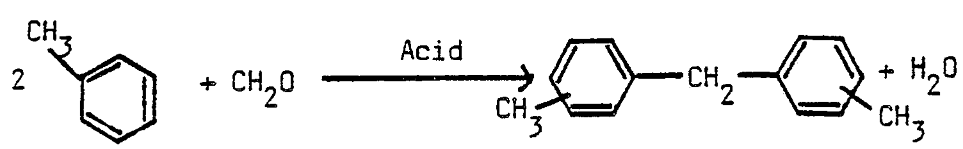


This synthesis is disclosed, e.g. in US-A-2,848,509, which, however, does not reveal the use of these products as electrical insulating fluids. Indeed, diarylalkanes have been described in the prior art as unsatisfactory capacitor fluids when other conventional methods of preparation are used. In testing DTM, it was surprisingly found that it was not merely acceptable, but was highly suited for use as a capacitor fluid. The pour point is unexpectedly low for a compound having a symmetrical molecule, making it an exceptionally suitable material for capacitor use.

A typical electrical capacitor which can be made using the insulator material of the present invention is described in US-A-4,355,346.

Typically, a capacitor includes a hermetically sealed container holding one or more windings or layers of a conducting foil. These foil windings or layers alternate with layers of an insulating or dielectric material. The foil may comprise any suitable electrically-conductive material, such as a metallic material, e.g., aluminium or copper. The layers may be composed of any suitable material, such as paper or a polymeric film, such as polypropylene, polyethylene, a polyester or a polycarbonate. In use, the material forming the dielectric layers is impregnated with DTM or a DTM-based insulating fluid of the present invention. Electrode terminals may be provided in accordance with conventional capacitor practice, for example, as described in US-A-4,355,346.

Typical properties of the insulating material of the present invention, as compared to typical prior art dielectric fluids, are set out below in the Table. The fluid of the present invention which is illustrated in the Table has a purity of 99.9 wt.%. The prior art dielectric fluids comprise diorthoxylylethane (DOXE), phenylorthoxylylethane (POXE) and isopropylbiphenyl (IPBP). These fluids may also be mixed with the fluids of the present invention.

TABLE

| ANALYSIS | PRIOR ART FLUIDS | | | PRESENT INVENTION TYPICAL ANALYSIS |
|---|---|---|---|---|
| | DOXE | POXE | IPBP | DTM |
| DC Leakage (Max) µa @ 15 KV | .3 | .3 | .3 | .03 |
| Dissipation Factor (Max) | .0015 | .001 | .0015 | .0001 |
| Dielectric Constant (±.05) | 2.55 | 2.63 | 2.55 | 2.573 |
| HV Breakdown (Min)KV(500vps) | 45 | 60 | 45 | 75 |
| Fire Point (Min) °C | 150 | 155 | 150 | 160 |
| Flash Point (Min) °C | 145 | 145 | 150 | 150 |
| Pour Point (Max) °C | -45 | -50 | -45 | -64 |
| All the fluids listed have a resistivity (min) of $5 \times 10^{13}$ ohm-cm at 500V per 1 min. | | | | |

As shown by the electrical properties set out in the Table, the fluid of the present invention exhibits, in general, equal or better properties, when compared to typical materials of the prior art, and is superior with respect to low temperature pour point, flash point and fire point.

## Claims

1. An electrical capacitor, comprising alternate layers of an electrically-conductive material and a dielectric material disposed within a sealed casing, with a dielectric fluid impregnated into the dielectric material, characterised in that the dielectric fluid comprises ditolylmethane.

2. A capacitor according to claim 1, in which the dielectric fluid comprises a mixture of ditolylmethane and at least one other dielectric fluid.

3. A capacitor according to claim 2, in which the dielectric fluid consists of ditolylmethane and at least one fluid selected from mixed diarylmethanes, diorthoxylylethane, phenylorthoxylylethane, isopropylbiphenyl and mixtures thereof.

4. A capacitor according to claim 3, in which the dielectric fluid consists of 20-80 parts by volume of ditolylmethane and 80-20 parts by volume of the other fluid.

5. A capacitor according to claim 4, in which the mixture comprises 50-50 parts by volume.

6. A capacitor according to any preceding claim, in which the ditolylmethane has been made by the Baeyer condensation reaction and exhibits a purity of over 99 wt.%.

European Patent Office

# EUROPEAN SEARCH REPORT

Application Number

EP 89 30 5791

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 127 905 (BAYER AG)<br>* Page 3, line 17 - page 4, line 6; page 5, lines 11-14,21-23; page 7, lines 4-19 *<br>--- | 1,2,4,6 | H 01 G 4/22<br>H 01 B 3/22 |
| D,A | US-A-4 054 937 (MANDELCORN et al.)<br>* Column 2, line 54 - column 3, line 50 *<br>--- | 1,3 | |
| A | EP-A-0 039 546 (GENERAL ELECTRIC CO.)<br>* Page 7, lines 13-22; claims 1,2,4,5 *<br>--- | 1,3 | |
| D,A | US-A-4 355 346 (GAUGER et al.)<br>* Column 2, lines 13-65 *<br>----- | 1,3 | |
| | | | **TECHNICAL FIELDS SEARCHED (Int. Cl.5)** |
| | | | H 01 G<br>H 01 B<br>C 07 C |

The present search report has been drawn up for all claims

| Place of search | Date of completion of the search | Examiner |
|---|---|---|
| THE HAGUE | 04-10-1989 | MES L.A. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document